# EUROPEAN PATENT APPLICATION

(11) **EP 4 618 106 A1**
(43) Date of publication of application: **17.09.2025**
(21) Application number: 24163550.7
(22) Date of filing: 14.03.2024
(51) Int. Cl.: G21C 5/12, C22C 27/04, C22F 1/18, G21C 1/30, H05H 6/00

(54) **USE OF A BARRIER MATERIAL COMPRISING MOLYBDENUM OR A MOLYBDENUM-BASED ALLOY IN A NUCLEAR REACTOR**

(71) Applicant: Transmutex SA, 1214 Vernier (CH)
(72) Inventor: BARBAGALLO, Massimo, 1214 Vernier (CH); DI CIOCCHIS, Franco, 1214 Vernier (CH); CATTONI, Lorenzo, 1214 Vernier (CH); TAGLIAPIETRA, Luca, 1214 Vernier (CH); AGOSTINI, Pietro, 51100 Pistoia (IT); ALEMBERTI, Alessandro, 16159 Genova (IT)
(74) Representative: Prinz & Partner mbB

(57) **Abstract**

A barrier material is used in a structural component of a nuclear reactor (10), the barrier material comprising molybdenum or a molybdenum-based alloy, wherein the barrier material has a molybdenum content of at least 90 wt.%, based on the total weight of the barrier material.

## Description

The invention relates to a use of a barrier material comprising molybdenum or a molybdenum-based alloy in a structural component of a nuclear reactor.

Within a nuclear reactor, different structural components, e.g. structural barriers, are used which have to withstand the harsh conditions during operation of the nuclear reactor. Typical examples of such structural components are proton beam windows in accelerator-driven reactor designs or fuel claddings which encompass fuel pellets of a fuel assembly in the core of the nuclear reactor. The inherent safety of a nuclear reactor is closely related to the reliability of such structural components to ensure that highly radioactive materials are properly confined.

In this respect, a suitable material for use in structural components of a nuclear reactor has to combine multiple requirements at once. Due to the exposure to neutrons, especially of fast neutrons, the material will experience swelling effects and neutron embrittlement which should be limited to acceptable levels without experiencing excessive degradation of the structural properties of the structural component. Further, the material must be able to withstand high thermal fluxes with tolerable levels of thermal stress and have an adequate fatigue resistance even after a high number of thermal cycles. If the material is exposed to a coolant of the nuclear reactor, corrosion effects due to interaction of the material and the coolant need to be minimized.

In the MEGAPIE experiment (Megawatt Pilot Experiment), featuring a proton beam power of 1 MW, a structural confinement of a liquid lead-bismuth eutectic spallation target was made of a thin-walled ferritic martensitic stainless steel showing low sensitivity to neutron swelling. The operating temperature of the experiment was limited to 400 °C to mitigate liquid metal corrosion and retain sufficient structural strength of the confinement. However, during post-test examinations, it was found that this material has a high sensitivity to lead-bismuth embrittlement. Such temperature limitation prevents using higher proton beam power. When higher proton beam power is necessary or desirable, a reduction of the proton beam window thickness is mandatory, which becomes impractical from a structural standpoint.

Also, different types of iron-based alloys like iron-chromium-aluminum (FeCrAl) alloy show a drastic loss of mechanical properties when operated at elevated temperatures above 550 °C.

In a fast reactor of the type of SPX, fuel claddings made of 15-15 Ti steel have been used due to its high resistance to neutron swelling and low levels of embrittlement. However, this steel material shows rapid corrosion at temperatures exceeding 480 °C when being exposed to typical coolants used in nuclear reactors, e.g. molten lead.

To cope with high thermal fluxes above 1 MW/m², tungsten-based alloys seem like a suitable choice due to their high-temperature resistance and minimal susceptibility to neutron-induced swelling. However, the inherent brittleness of tungsten limits the suitability of these alloys for use in structural components of nuclear reactors given the cyclic thermo-mechanical loads during operation of a nuclear reactor.

Another proposed solution for structural components is a combination of a steel component as primary barrier which is coated with one or more stable corrosion-resistant metal oxides. However, such designs have the inherent risk of localized breaches of the protective coating resulting from elastic or plastic deformations of the structural component over the lifetime of the nuclear reactor. Such breaches can expose the underlying steel component to the aggressive environment of the core of the nuclear reactor.

Thus, there is still a demand for materials suitable for use in structural components of nuclear reactors which fulfill the demands in terms of neutron-induced swelling and embrittlement, resistance to thermal stresses and corrosion effects and mechanical properties at the same time.

The object of the invention is to provide a solution for structural components of a nuclear reactor which allows to fulfill these requirements.

The object of the invention is solved by a use of a barrier material comprising molybdenum or a molybdenum-based alloy in a structural component of a nuclear reactor, the barrier material having a molybdenum content of at least 90 wt.%, based on the total weight of the barrier material.

The invention is based on the idea of using molybdenum or a molybdenum-based alloy with a very high content of molybdenum in structural components of nuclear reactors. Molybdenum and such molybdenum-based alloys offer exceptionally high thermal conductivity, a low coefficient of expansion when being exposed to neutron fluxes, strong corrosion resistance, high strength and excellent strength retention, even when exposed to high temperatures. Up to now, molybdenum and molybdenum-based alloys with a high molybdenum-content have been used in other demanding applications like high-temperature heating elements, evaporator crucibles, sputtering targets and the like. However, it is now contemplated that the specific property profile of these materials is suitable for the use in structural components of nuclear reactors, too, such that an especially reliable nuclear reactor can be realized.

In one variant, the barrier material has a molybdenum content of at least 95.0 wt.%, based on the total weight of the barrier material, preferably of at least 99.0 wt.%. That is, any further components forming a molybdenum-based alloy are present in rather low or very low amounts within the barrier material. Accordingly, these further components are used to further improve specific properties of pure molybdenum tailored to the intended application scenario of the structural component within the nuclear reactor.

The molybdenum-based alloy can comprise molybdenum and one or more alloying components, wherein the one or more alloying components are selected from the group of transition metals,, carbon, lanthanum oxide, yttrium oxide, cerium oxide and combinations thereof, preferably selected from the group of titanium, zirconium, hafnium, carbon, lanthanum oxide, yttrium oxide, cerium oxide and combinations thereof.

Typical examples of suitable molybdenum-based alloys are TZM (titanium-zirconium-molybdenum), MHC (molybdenum-hafnium-carbon), ML (molybdenum-lanthanum-oxide), Mo-ILQ (molybdenum-incandescent-lamp-quality) and MY (molybdenum-yttrium-cerium oxide).

Of course, the molybdenum-based alloy can further comprise unavoidable impurities not explicitly mentioned in the above-referenced list of alloying components, as long as the presence of these unavoidable impurities do not substantially interfere with the properties of the barrier material.

Preferably, the one or more alloying components are selected from the group consisting of titanium, zirconium, carbon and combinations thereof. Such molybdenum-based alloys, e.g. TZM, provide an especially beneficial property profile for applications in nuclear reactors.

The molybdenum-based alloy can comprise from 0.03 to 1.3 wt.% of the one or more alloying components, based on the total weight of the molybdenum-based alloy, preferably from 0.3 to 0.75 wt.%, more preferably from 0.45 to 0.7 wt.%.

In one variant, the barrier material consists of molybdenum or the molybdenum-based alloy.

It is also possible that the structural component consists of the barrier metal such that the properties of the structural component will be solely determined by the used barrier material.

To mitigate the effect of radiation embrittlement, the structural component can be heated to a minimum temperature in the range of from 700 to 850 °C during operation of the nuclear reactor. Such a minimum temperature is much lower than the melting point and the recrystallization point of molybdenum and the molybdenum-based alloys according to the invention but is high enough to enhance atomic diffusion mechanisms within the barrier material. Under such temperatures, molybdenum and molybdenum-based alloys exhibit a thermal recovery or self-healing effect which removes irradiation-induced defects in the barrier material caused by neutron exposure, such that the reliability and lifetime of the structural component is improved. As a consequence of this effect, such a high minimum temperature enables the coupling of the structural component with multi-Megawatt proton beam powers.

The minimum temperature, i.e. the minimum temperature during irradiation, is especially chosen to be adjusted to the ductile-to-brittle transition temperature (DBTT) of the barrier material. If a material is operated at a temperature below its DBTT, this results in the material becoming brittle and more prone to fracture. By choosing a minimum temperature during irradiation from 700 to 850 °C, it can be ensured that the DBTT of the barrier material will be maintained below the minimum temperature during operation, thus eliminating or at least minimizing the risk of brittle failure of the structural component.

Further, the structural component can be heated to a maximum operating temperature of up to 1050 °C during operation of the nuclear reactor to limit the temperature-induced decrease of the mechanical properties of the structural component.

The structural component can be exposed to a thermal flux of more than 1 MW/m² during operation of the nuclear reactor, e.g. a thermal flux of at least 2 MW/m². Due to using molybdenum or a molybdenum-based alloy in the barrier material, the barrier material has a thermal conductivity which is sufficient for distributing the heat induced due to thermal fluxes of more than 1 MW/m². Thus, it becomes possible to use higher operating temperatures of the nuclear reactor and/or higher proton beam powers resulting in a higher thermodynamic efficiency of the nuclear reactor and a better exploitation of the fuel within the core of the nuclear reactor without risking defects based on thermally induced effects on the barrier material.

Further, due to the high thermal conductivity of the barrier material, the thickness of the structural component can be increased without risking creating local thermal hotspots. This is especially beneficial for applications in which the structural component has to withstand differential pressures.

Preferably, the nuclear reactor is a fast reactor. In a fast reactor, the nuclear chain reaction is maintained by fast neutrons carrying average energies of more than 1 MeV without using a moderator. Operating temperatures of fast reactors are typically much higher than of other types of nuclear reactors. By using the barrier material, these operating temperatures can be reliably handled. Fast reactors also have the advantage that they can be operated as breeding reactors and it is possible to re-use spent fuel, e.g. obtained from thermal neutron light water reactors.

Even more preferably, the fast reactor is a sub-critical fast reactor. Sub-critical reactors need an additional neutron source for maintaining the nuclear chain reaction and can thus be precisely controlled based on operation of the additional neutron source.

E.g., the sub-critical fast reactor can comprise a spallation neutron source which produces neutrons upon irradiation with a proton beam. Thus, by controlling the power of the proton beam, the operation of the nuclear reactor can be precisely controlled. One application scenario is the use of the barrier material in a subcritical transmutation accelerated regenerative nuclear reactor.

The structural component can be exposed to a coolant during operation of the nuclear reactor, e.g. a liquid metal-based coolant or high-temperature helium. The barrier metal comprising molybdenum or a molybdenum-based alloy shows low levels of corrosion even when exposed to coolants used in nuclear reactors at high operating temperatures. The term "high-temperature helium" denotes that helium is used as a coolant with an outlet temperature of at least 700 °C.

In one variant, the coolant is a liquid metal-based coolant, wherein the liquid metal-based coolant can be sodium, lead or a lead-bismuth eutectic. Such coolants can be used in fast reactors in which the metal-based coolant forms the spallation source. Due to the use of the barrier material in the structural component, even in such application scenarios, a high corrosion-resistance can be ensured, further increasing the reliability of the nuclear reactor.

The structural component can be a proton beam window, a spallation target for a spallation neutron source, a structural container of nuclear fuel, e.g. a fuel cladding, an emergency container to collect a melted core after a major nuclear accident (also known as "corium"), a core grid, a vessel housing of the nuclear reactor, e.g. a primary reactor vessel, an emergency decay heat removal system (DHR), a steam or heat handling device, e.g. a steam generator or a heat exchanger within a reactor containment, e.g. a primary or intermediate heat exchanger. Preferably, the structural component is a proton beam window or a fuel cladding.

Proton beam windows are used in nuclear reactors relying on an external proton source producing a proton beam which is directed through a vacuumized proton beam tube onto a spallation neutron source to produce neutrons for controlling the nuclear chain reaction. The proton beam window is arranged at the end of the proton beam tube and forms a barrier towards the surrounding medium. Based on the desired proton beam current and proton beam power, the proton beam window has to withstand substantial thermo-mechanical loads and stresses, which can be reliably tolerated by the barrier material. Due to the high thermal conductivity of molybdenum and molybdenum-based alloys, the thickness of the proton beam window can be increased compared to other materials like steel-based materials, thereby improving structural robustness without risking the formation of local hotspots or exceeding the maximum operating temperature of the proton beam window.

Fuel claddings are used to encompass the actual fuel, e.g. fuel pellets, used in the nuclear reactor such that the combination of fuel cladding and fuel forms the basic structure of a given fuel element in the nuclear reactor.

Further advantages and properties of the invention will become more apparent from the following description of exemplary embodiments of the invention, which are not to be understood as limiting, and from the accompanying drawings. In the drawings:
- Fig. 1 shows a schematic depiction of a nuclear reactor with a structural component for which a barrier material is used according to a first embodiment of the invention;
- Fig. 2 shows selected parts of a proton beam tube used in the nuclear reactor of Fig. 1;
- Fig. 3 shows another schematic depiction of the proton beam tube of Fig. 2; and
- Fig. 4 shows a schematic depiction of another structural component of a nuclear reactor in which a barrier material is used according to a second embodiment of the invention.

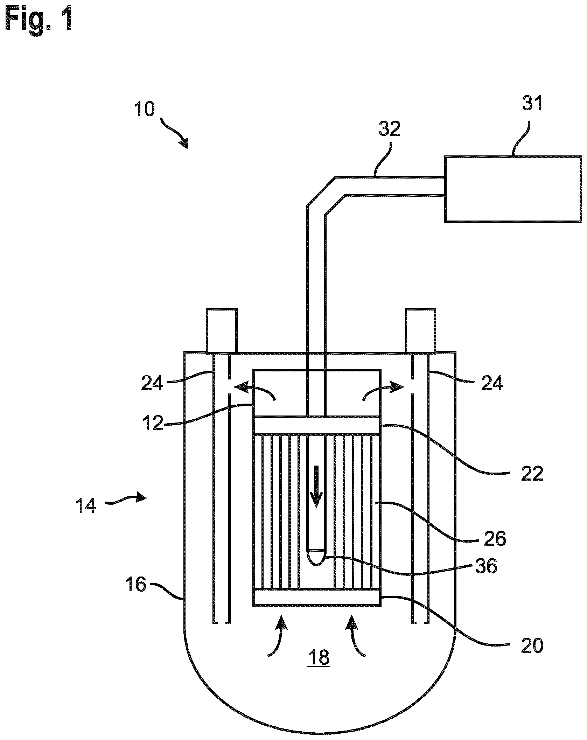

Fig. 1 is a schematic depiction of selected parts of a nuclear reactor 10. The nuclear reactor 10 comprises a core 12 contained within a reactor vessel 14 having a vessel housing 16.

Within the reactor vessel 14, a coolant 18 is contained which flows from below a lower core grid 20 of the core 12 towards an upper core grid 22 of the core 12, as indicated by curved arrows in Fig. 1. The coolant 18, which heats up while flowing through to the core 12 due to heat produced in the core 12, is transferred to heat exchangers 24, which are also used to control the supply and flow of the coolant 18 within the reactor vessel 14.

Of course, as known in the art, the heat exchangers 24 will be connected to further (not shown) components of the nuclear reactor 10 for producing electricity, e.g. a steam generator or further heat exchangers. These further components can also be used to measure and/or control the oxygen content within the coolant 18.

E.g., a (not shown) oxygen content control device might be used which can control the oxygen content of the coolant 18 by oxygen extraction using hydrogen or a hydrogen-producing material. Preferably, the oxygen content of the coolant 18 is below 10⁻⁶ weight percent (1 ppmw), based on the total weight of the coolant 18.

In the shown embodiment, the coolant 18 is a liquid metal coolant, wherein the liquid metal coolant can be sodium, lead or a lead-bismuth eutectic. Of course, depending on the type of nuclear reactor 10, other types of coolants 18 can also be used, e.g. high-temperature helium with an outlet temperature of at least 700 °C in a gas-cooled fast reactor, e.g. of about 850 °C.

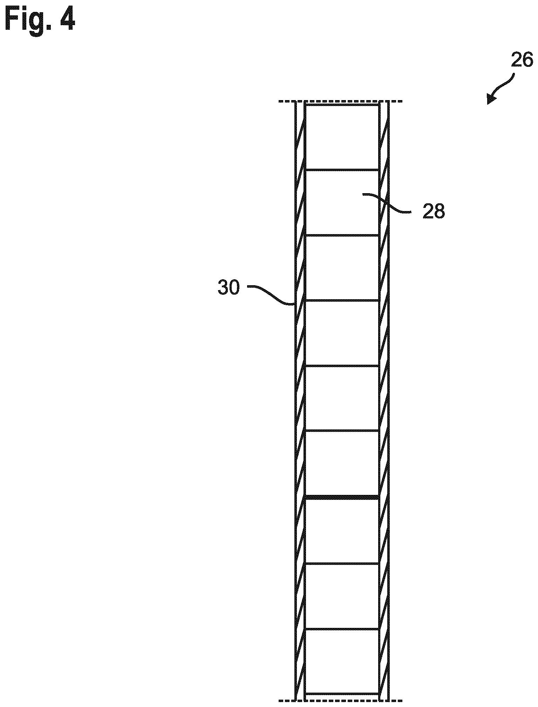

The core 12 contains a plurality of fuel elements 26 which extend between the lower core grid 20 and the upper core grid 22. The fuel elements 26 contain the fuel of the nuclear reactor, preferably in the form of fuel pellets 28 encompassed by a fuel cladding 30 (see Fig. 4). Of course, the core 12 can comprise further components not shown in Fig. 1 like control rods.

Further, the nuclear reactor 10 comprises a particle accelerator device 31 configured to produce a proton beam which is transferred from the particle accelerator device 31 towards the core 12, as indicated by an arrow in Fig. 1, within a vacuumized proton beam tube 32 which extends into the core 12. The particle accelerator device 31 can be based on a cyclotron or a linear accelerator. Preferably, the particle accelerator device 31 is based on a cyclotron.

At an end section 34 of the proton beam tube 32, which is located within the core 12, the proton beam tube 32 is terminated by a proton beam window 36.

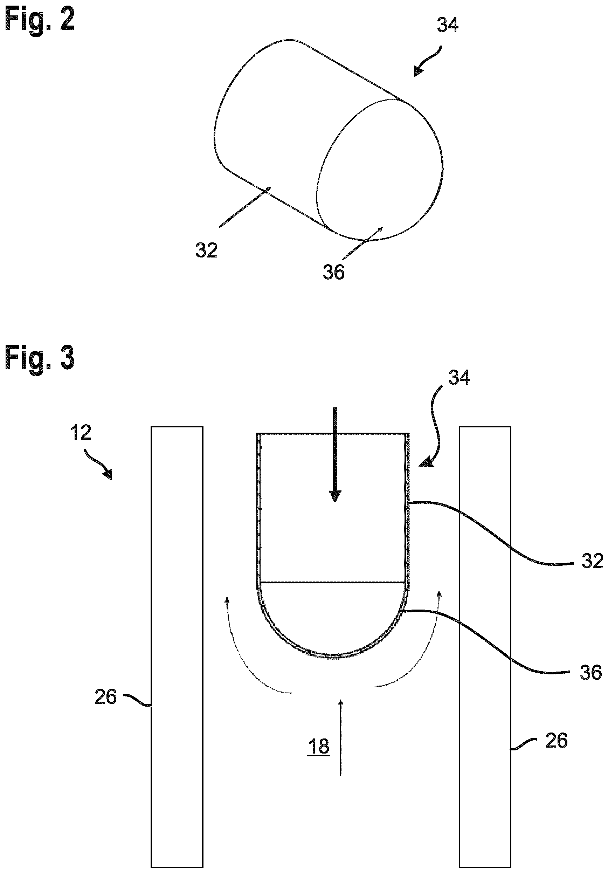

Fig. 2 shows selected parts of the end section 34 of the proton beam tube 32. In Fig. 2, it is better visible that the proton beam windows 36 is of hemispherical shape and joined to the essentially cylindrical proton beam tube 32. That is, the proton beam tube 32 and the proton beam window 36 are mechanically connected to each other.

Fig. 3 shows a schematic cross section of the end section 34 of the proton beam tube 32 within the core 12. The proton beam window 36 is arranged between the fuel elements 26 and immersed in the coolant 18, i.e. in the liquid metal coolant in the shown embodiment. Due to the connection of the proton beam tube 32 and the proton beam window 36, the inner part of the vacuumized proton beam tube is sealed from the coolant 18.

Thus, the proton beam window 36 separates the vacuumized proton beam tube inner volume from the coolant 18. However, highly energetic protons generated by the particle accelerator device 31, which form the proton beam and which are transferred to the core 12 via the proton beam tube 32, at least partially cross the proton beam window 36 and enter the liquid metal coolant.

The term "highly energetic proton" is understood in this context as a proton having an energy of at least 500 MeV, e.g. 600 MeV or more, wherein the maximum energy possible for the respective proton is determined by the type of particle accelerator device 31 used.

Once the highly energetic protons reach the liquid metal coolant, they induce spallation reactions that produce the number of neutrons required to operate the core 12, i.e. to keep the fission chain reaction running. Accordingly, the nuclear reactor 10 shown in the embodiment is a sub-critical fast reactor and the liquid metal coolant is used as spallation target. Other types of spallation targets can also be used, e.g. a lead-bismuth target in a gas-cooled fast reactor.

The proton beam current during operation of the nuclear reactor 10 is typically more than 2.0 mA, resulting in a beam power of multiple MW and a thermal flux of more than 1 MW/m² during operation of the nuclear reactor 10.

The material used in the proton beam window 36 is chosen such to withstand the aggressive conditions experienced by the proton beam window 36, i.e. the high thermal fluxes, neutron irradiation, thermo-mechanical stresses, the aggressive liquid metal coolant and the high-pressure differential between the vacuumized inner volume of the proton beam tube 32 and the bath of coolant 18.

To reliably withstand these conditions, the proton beam window 36 consists of a barrier material which comprises molybdenum or a molybdenum-based alloy, the barrier material having a molybdenum content of at least 90 wt.%, based on the total weight of the barrier material, especially of at least 95.0 wt.%, preferably of at least 99.0 wt.%.

The molybdenum-based alloy comprises molybdenum and one or more alloying components, the one or more alloying components being selected from the group of transition metals, carbon, lanthanum oxide, yttrium oxide, cerium oxide and combinations thereof, as well as unavoidable impurities, preferably selected from the group consisting of titanium, zirconium, hafnium, carbon, lanthanum oxide, yttrium oxide, cerium oxide and combinations thereof, even more preferably selected from the group of titanium, zirconium, carbon and combinations thereof.

The one or more alloying components especially are present in an amount from 0.03 to 1.3 wt.%, based on the total weight of the molybdenum-based alloy, preferably from 0.3 to 0.75 wt.%, more preferably from 0.45 to 0.7 wt.%.

E.g., the molybdenum-based alloy is TZM (titanium-zirconium-molybdenum), MHC (molybdenum-hafnium-carbon), ML (molybdenum-lanthanum-oxide), Mo-ILQ (molybdenum-incandescent-lamp-quality) or MY (molybdenum-yttrium-cerium oxide), most preferably TZM.

These materials have a high corrosion resistance against liquid metal coolants like lead or lead-bismuth eutectics, high strength and excellent strength retention. E.g., the barrier material exhibits a high-cycle fatigue resistance at 10⁶ cycles of 250 MPa or more, e.g. of about 300 MPa.

Further, the proton beam window is heated to a minimum temperature in the range of from 700 to 850 °C and a maximum temperature of up to 1050 °C, e.g. 1000 °C, during operation of the nuclear reactor 10.

At such temperatures, the barrier material exhibits a self-healing mechanism by which irradiation-induced defects in the barrier material can be rectified, preserving the mechanical properties of the barrier material. Further, the barrier material, e.g. TZM, is chemically compatible with liquid metal coolants up to the maximum temperature such to minimize corrosion effects.

In the shown embodiment, the nuclear reactor 10 is a sub-critical fast reactor. Of course, the nuclear reactor 10 can also be of a different type of nuclear reactor.

Further, only the proton beam window 36 has been described as consisting of the barrier material. However, in addition or instead of the proton beam window 36, other structural components of the nuclear reactor 10 can be made of or comprise the barrier material. E.g., the reactor vessel 14, the lower core grid 20, the upper core grid 22, the heat exchangers 24, the fuel cladding 30 and/or a fuel plug can consist of or comprise the barrier material.

Further examples of (not shown) components of the nuclear reactor 10 which beneficially can consist of or comprise the barrier material are a spallation target for a spallation neutron source, an emergency container to collect a melted core after a major nuclear accident, an emergency decay heat removal system or a steam generator located within a reactor containment of the nuclear reactor 10.

Fig. 4 shows a schematic depiction of another structural component in which the barrier material is used according to a second embodiment of the invention.

The second embodiment essentially corresponds to the first embodiment such that only differences will be described in the following. Same reference numerals denote the same or functionally same components and it is referred to the above explanations.

In the second embodiment, the fuel cladding 30 of the fuel elements 26 consists of the barrier metal. That is, fuel pellets 28 comprising a nuclear fuel, e.g. a thorium-based nuclear fuel, are encompassed within the fuel cladding 30 made of the barrier material which serves as a structural container for the fuel pellets 28.

The fuel pellets 28 are encompassed by the fuel cladding 30 to form the fuel elements 26 placed in the core 12 of the nuclear reactor 10. The fuel cladding 30 thus acts as primary containment barrier of the fuel pellets 28.

Due to using the barrier material as fuel cladding 30, the fuel elements 26 can be operated at high temperatures up to the maximum temperature of 1050 °C without considerable corrosion effects, even when using a coolant 18 like a liquid metal coolant, and while providing good mechanical properties. E.g., even at a temperature of 1000 °C, a molybdenum-based alloy like TZM has mechanical properties comparable to that of steels employed in nuclear application scenarios at a temperature of about 550 °C.

Further, at a temperature of 1000 °C and a tensile stress of about 200 MPa, barrier materials according to the invention like molybdenum or TZM exhibit a negligible creep rate, resulting in a creep-rupture time exceeding 20.000 operating hours. This is especially beneficial for fuel claddings 30, whose lifetime is typically determined by its creep resistance.

In general, using the barrier material comprising molybdenum or a molybdenum-based alloy in a structural component of a nuclear reactor 10 allows the structural component to be resistant to neutron-induced effects like swelling and embrittlement, ensure high resistance to thermal stresses and corrosion effects and provides good mechanical properties, thereby increasing the lifetime and reliability of the nuclear reactor 10.

## Claims

1. A use of a barrier material comprising molybdenum or a molybdenum-based alloy in a structural component of a nuclear reactor (10), the barrier material having a molybdenum content of at least 90 wt.%, based on the total weight of the barrier material.

2. The use according to claim 1, the barrier material having a molybdenum content of at least 95.0 wt.%, based on the total weight of the barrier material, preferably of at least 99.0 wt.%.

3. The use according to claim 1 or 2, wherein the molybdenum-based alloy comprises molybdenum and one or more alloying components, the one or more alloying components being selected from the group of transition metals, carbon, lanthanum oxide, yttrium oxide, cerium oxide and combinations thereof, preferably from the group of titanium, zirconium, hafnium, carbon, lanthanum oxide, yttrium oxide, cerium oxide and combinations thereof.

4. The use according to claim 3, the one or more alloying components being selected from the group of titanium, zirconium, carbon and combinations thereof.

5. The use according to claim 3 or 4, the molybdenum-based alloy comprising from 0.03 to 1.3 wt.% of the one or more alloying components, based on the total weight of the molybdenum-based alloy.

6. The use according to claim 5, the molybdenum-based alloy comprising from 0.3 to 0.75 wt.% of the one or more alloying components, based on the total weight of the molybdenum-based alloy.

7. The use according to any one of the preceding claims, wherein the structural component is heated to a minimum temperature in the range of from 700 to 850 °C during operation of the nuclear reactor (10).

8. The use according to any one of the preceding claims, wherein the structural component is heated to a maximum operating temperature of up to 1050 °C during operation of the nuclear reactor (10).

9. The use according to any one of the preceding claims, wherein the structural component is exposed to a thermal flux of more than 1 MW/m² during operation of the nuclear reactor (10).

10. The use according to any one of the preceding claims, the nuclear reactor (10) being a fast reactor.

11. The use according to any one of the preceding claims, wherein the structural component is exposed to a coolant (18) during operation of the nuclear reactor.

12. The use according to claim 11, wherein the coolant (18) is a liquid metal-based coolant or high-temperature helium.

13. The use according to claim 12, wherein the coolant (18) is a liquid metal-based coolant, the liquid metal-based coolant being selected from sodium, lead or a lead-bismuth eutectic.

14. The use according to any one of the preceding claims, wherein the structural component is a proton beam window (36), a spallation target, a structural container of nuclear fuel, an emergency container, a core grid (20, 22), a vessel housing (16) of the nuclear reactor (10), an emergency decay heat removal system, a steam or heat handling device or a heat exchanger.

15. The use according to any one of the preceding claims, wherein the barrier material consists of molybdenum or the molybdenum-based alloy.
